# EUROPÄISCHE PATENTSCHRIFT

(11) **EP 3 566 801 B1**
(45) Veröffentlichungstag und Bekanntmachung des Hinweises auf die Patenterteilung: **05.06.2024**
(21) Anmeldenummer: 19171123.3
(22) Anmeldetag: 25.04.2019
(51) Int. Cl.: B23B 31/117, B23B 31/02

(54) **SCHRUMPFSPANNADAPTER FUER EIN SPANNZANGENFUTTER**
SHRINK TIGHTENING ADAPTER FOR A COLLET CHUCK
ADAPTATEUR DE SERRAGE À RETRAIT POUR UN MANDRIN À PINCE DE SERRAGE

(30) Priorität: 09.05.2018 DE 102018111127
(43) Veröffentlichungstag der Anmeldung: 13.11.2019
(73) Patentinhaber: Franz Haimer Maschinenbau KG, 86568 Hollenbach-Igenhausen (DE)
(72) Erfinder: Haimer, Franz, 86568 Hollenbach-Igenhausen (DE)

(56) Entgegenhaltungen:
- EP-A1- 1 761 355
- EP-A1- 2 489 455
- EP-B1- 1 761 355
- DE-A1-102007 041 937
- DE-A1-102009 044 049
- JP-U- H0 199 513
- US-A1- 2016 114 407

## Beschreibung

Die Erfindung betrifft einen Schrumpfspannadapter für ein Spannzangenfutter.

Derartige Schrumpfspannadapter sind aus der WO 2004/078391 A2 bekannt. Diese weisen einen hinteren konischen Haltebereich zur Aufnahme des Schrumpfspannadapters in einem Spannzangenfutter, einen vorderen Aufnahmebereich zur Aufnahme eines Werkzeugschafts und eine von einer vorderen Stirnfläche des Aufnahmebereichs zu einer hintern Stirnfläche des Haltebereichs verlaufende Durchgangsöffnung zur Halterung des Werkzeugschafts auf. In derartige Schrumpfspannadapter können z.B. Bohrer oder andere mit einem Werkzeugschaft versehene Werkzeuge eingeschrumpft und über den Schrumpfspannadapter mit Hilfe einer Spannmutter in einem Spannzangenfutter gespannt werden.

Die bekannten Schrumpfspannadapter der genannten Art weisen in der Regel eine ungleichmäßige Materialverteilung über der Gesamtlänge auf. Dies führt insbesondere bei kleineren Schrumpfspannadaptern dazu, dass sich die dünnwandigeren Bereiche wesentlich schneller erwärmen und ausdehnen, als der dickwandigere Bereich in der Mitte des Schrumpfspannadapters. Dadurch kann sich bei der Erwärmung das Problem ergeben, dass sich die dünnwandigen Bereiche übermäßig stark erhitzen, bevor die dickwandigen Bereiche die zum Einschrumpfen benötigte Temperatur erreichen. Ein zu starkes Erhitzen der dünnwandigen Bereiche kann zu Schäden am Schrumpfspannfutter und einer dadurch bedingten Verkürzung der Produktlebensdauer führen. Auch bei der Entnahme des Werkzeugs kann sich eine zu starke Erwärmung der dünnwandigen Bereiche nachteilig auswirken. Da eine zu starke Erhitzung auch zu einer Erwärmung des Werkzeugschafts führt, lässt sich das Werkzeug schwerer entfernen und es besteht eine erhöhte Verletzungsgefahr durch Verbrennungen.

Aus der EP 2 489 455 A1 ist ein Werkzeug mit zentralgekühltem Schneideteil zum Aufreiben von Löchern, gebildet von dem Schneidwerkzeug und einem zylindrischen, radial schrumpfbaren, das Schneidwerkzeug aufnehmbaren Spannfutter, bekannt, welches in ein hydraulisch betätigbares Spannzeug eingespannt wird. Die EP 2 489 455 A1 offenbart einen Schrumpfspannadapter für ein Spannzangenfutter, der einen hinteren Haltebereich zur Halterung in einem Spannzangenfutter, einen vorderen Aufnahmebereich zur Halterung eines Werkzeugschaft und eine von einer vorderen Stirnfläche des Aufnahmebereichs zu einer hinteren Stirnfläche des Haltebereichs verlaufende Durchgangsöffnung enthält, deren Spannbereich sich bis in den hinteren Haltebereich erstreckt, wobei in einem mittleren Bereich der Durchgangsöffnung mehrere von der Durchgangsöffnung radial nach außen verlaufende und über den Umfang verteilte Schlitze angeordnet sind, deren vordere Enden von der vorderen Stirnfläche und deren hintere Enden von der hinteren Stirnfläche beabstandet sind.

Aufgabe der Erfindung ist es, einen Schrumpfspannadapter zu schaffen, bei dem die vorgenannten Probleme vermieden werden können.

Diese Aufgabe wird durch einen Schrumpfspannadapter mit den Merkmalen des Anspruchs 1 gelöst. Zweckmäßige Weiterbildungen und vorteilhafte Ausgestaltungen der Erfindung sind in den Unteransprüchen angegeben.

Bei dem erfindungsgemäßen Schrumpfspannadapter sind in einem mittleren Bereich der Durchgangsöffnung mehrere von der Durchgangsöffnung radial nach außen verlaufende und über den Umfang verteilte Schlitze angeordnet, deren Enden von der hinteren Stirnfläche und der vorderen Stirnfläche beabstandet sind. Die an der Durchgangsöffnung angeordneten Schlitze wirken wie Dehnfugen, durch die sich der Spannbereich der Durchgangsöffnung früher aufweiten kann. Das Material an der Außenseite des Schrumpfspannadapters, das sich beim Aufheizen schneller erwärmt, kann die innenliegenden Bereiche einfacher radial mit nach außen ziehen, ohne dass der innenliegende Bereich durcherhitzt werden muss. Durch das beschleunigte Aufweiten können durch übermäßiges Erhitzen bedingte Schädigungen vermieden und die Produktlebensdauer erhöht werden. Da außerdem auch die Werkzeuge durch das schnellere Aufweiten nicht so stark erwärmt werden, lassen sich diese leichter entnehmen und es besteht eine geringere Verletzungsgefahr durch Verbrennungen.

Die Schlitze können vorzugsweise in einem hinteren Teil des Spannbereichs der Durchgangsöffnung angeordnet sein. Bevorzugt erstrecken sich die Schlitze auch bis in den vorderen Aufnahmebereich des Schrumpfspannadapters hinein. Auch wenn die Schlitze in erster Linie bei Schrumpfhülsen mit dicken und dünnen Wandbereichen ihre Wirkung entfalten, können sie auch bei kurzen Schrumpfhülsen verwendet werden. Auch wenn der gegenüber der Spannzange nach vorne vorstehende Aufnahmebereich kurz ist, können die Schlitze das Ausschrumpfen eines Werkzeugs erleichtern.

In einer besonders bevorzugten Ausführung sind in der Durchgangsöffnung vier über den Umfang gleichmäßig verteilte Schlitze vorgesehen. Es können aber auch nur zwei, drei oder mehr als vier Schlitze sein.

Die Tiefe T der Schlitze ist vorzugsweise so gewählt, dass die in diesem Bereich verbleibende Außenwand des Schrumpfspannfutters im Wesentlichen dieselbe Dicke wie im vorderen Aufnahmebereich aufweist. Die Schlitze weisen z.B. eine Breite von 0,5 bis 2 mm auf.

Die Schlitze sind vorzugsweise parallel zu einer Mittelachse des Schrumpfspannadapters angeordnet. Sie können aber auch bis zu einem Winkel gegenüber der Mittelachse geneigt sein.

In vorteilhafter Weise sind die Schlitze so dimensioniert, dass sie die Außenkontur des Schrumpfspannadapters nicht durchbrechen.

Die Schlitze können aber auch so dimensioniert sein, dass sich an dem Übergang von dem hinteren Haltebereich zum vorderen Aufnahmebereich ein Durchbruch ergibt. Über diesen Durchbruch kann ein Kühlmittel zur Außenseite des vorderen Aufnahmereichs geleitet werden.

In vorteilhafter Weise eignet sich der Schrumpfspannadapter für verschiedene Einsätze bzw. Einsatzmöglichkeiten. So ist erfindungsgemäß vorgeschlagen, den Schrumpfadapter in einem Spannzangenfutter, insbesondere rotierend bei einer Fräsmaschine oder rotierend oder stehend bei einer Drehmaschine, einzusetzen bzw. zu verwenden.

Weiterhin ergeben sich durch die Verwendung/den Einsatz des Schrumpfspannadapters in übergeordnete Baueinheiten besondere (Verbund-)Systeme.

Ein solches System ergibt sich insbesondere, wenn der Schrumpfspannadapter unter Verwendung einer Überwurfmutter in einem Spannzangenfutter verspannt wird. Anders ausgedrückt, dieses System sieht so ein Spannzangenfutter, eine Überwurfmutter sowie den Schrumpfspannadapter vor.

Zweckmäßig ist es weiter, wenn ein solches System darüber hinaus auch eine Spindel aufweist, welche mit dem Spannzangenfutter verbindbar ist. Alternativ kann auch eine einstückig mit dem Spannzangenfutter ausgebildete Spindel vorgesehen sein. D.h., das Spannzangenfutter kann integraler Bestandteil der Spindel sein.

Weiter - in einem solchen System - kann ein Werkzeug, beispielsweise ein Fräswerkzeug oder Bohrer oder Drehmeißel, vorgesehen sein, welches in den Schrumpfspannadapter einschrumpfbar bzw. eingeschrumpft ist.

Auch wenn in der Beschreibung bzw. in den Patentansprüchen einige Begriffe jeweils im Singular oder in Verbindung mit einem Zahlwort verwendet werden, soll der Umfang der Erfindung für diese Begriffe nicht auf den Singular oder das jeweilige Zahlwort eingeschränkt sein. Ferner sind die Wörter "ein" bzw. "eine" nicht als Zahlwörter, sondern als unbestimmte Artikel zu verstehen.

Die oben beschriebenen Eigenschaften, Merkmale und Vorteile der Erfindung sowie die Art und Weise, wie diese erreicht werden, werden klarer und deutlicher verständlich im Zusammenhang mit der folgenden Beschreibung der Ausführungsbeispiele der Erfindung, die im Zusammenhang mit der bzw. den Zeichnungen/Figuren näher erläutert wird/werden (gleiche Bauteile/Komponenten und Funktionen weisen in den Zeichnungen/Figuren gleiche Bezugszeichen auf).

Weitere Besonderheiten und Vorzüge ergeben sich aus der folgenden Beschreibung eines bevorzugten Ausführungsbeispiels anhand der Zeichnung. Es zeigen:
- **Figur 1**: ein erstes Ausführungsbeispiel eines Schrumpfspannadapters in einem Längsschnitt;
- **Figur 2**: den Schrumpfspannadapter von Figur 1 in einer Schnittansicht entlang der Linie A-A von Figur 1;
- **Figur 3**: den Schrumpfspannadapter von Figur 1 in einer geschnittenen Perspektivansicht;
- **Figur 4**: ein zweites Ausführungsbeispiel eines Schrumpfspannadapters in einem Längschnitt;
- **Figur 5**: den Schrumpfspannadapter von Figur 4 in einer Schnittansicht entlang der Linie A-A von Figur 4;
- **Figur 6**: den Schrumpfspannadapter von Figur 4 in einer geschnittenen Perspektivansicht;
- **Figur 7**: ein erstes Ausführungsbeispiel eines Systems mit einem Spannzangenfutter, einem Schrumpfspannadapter, einer Spannmutter sowie einem Werkzeug in einem Längsschnitt;
- **Figur 8**: das System von Figur 7 in einer Perspektivansicht;
- **Figur 9**: eine Detaildarstellung des Systems von Figur 7 in einem Längsschnitt;
- **Figur 10**: ein zweites Ausführungsbeispiel eines Systems mit einer in einem Gehäuse gelagerten, ein integriertes Spannzangenfutter aufweisenden Spindel, einem Schrumpfspannadapter, einer Spannmutter sowie einem Werkzeug in einem Längsschnitt;
- **Figur 11**: das System von Figur 10 in einer Perspektivansicht;
- **Figur 12**: eine Detaildarstellung des Systems von Figur 7 in einem Längsschnitt;
- **Figur 13**: ein weiteres Beispiel eines Schrumpfspannadapters, der nicht Teil der vorliegenden Erfindung ist, in einem Längsschnitt;
- **Figur 14**: den Schrumpfspannadapter von Figur 13 in einer Schnittansicht entlang der Linie A-A von Figur 13 und
- **Figur 15**: den Schrumpfspannadapter von Figur 13 in einer geschnittenen Perspektivansicht.

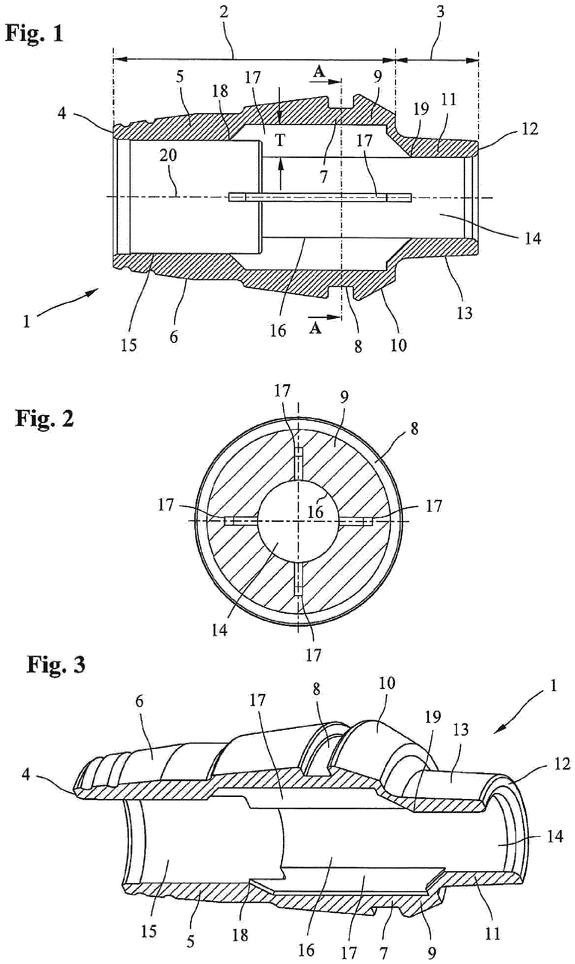

In den Figuren 1 bis 3 ist ein erstes Ausführungsbeispiel eines Schrumpfspannadapters 1 für ein Spannzangenfutter gezeigt. In diesen Schrumpfspannadapter kann z.B. ein Bohrer, ein Fräser oder ein anderes mit einem Werkzeugschaft versehenes Werkzeug eingeschrumpft und über den Schrumpfspannadapter mit Hilfe einer Spannmutter in einem an sich bekannten Spannzangenfutter gespannt werden.

Der als Rotationskörper ausgebildete Schrumpfspannadapter 1 weist einen hinteren Haltebereich 2 zur Aufnahme des Schrumpfspannadapters 1 in einem Spannzangenfutter und einen werkzeugseitigen vorderen Aufnahmebereich 3 zur Aufnahme eines Werkzeugschafts auf. Der hintere Haltebereich 2 umfasst einen sich zu einer hinteren Stirnfläche 4 hin verjüngenden konischen Hinterteil 5 mit einer konischen Außenfläche 6, einen erweiterten Zwischenteil 7 mit einer äußeren Ringnut 8 und einen Vorderteil 9 mit einer konischen Spannfläche 10. Der vordere Aufnahmebereich 3 enthält einen gegenüber dem hinteren Haltebereich 2 nach vorne vorstehenden Halteteil 11 mit einer vorderen Stirnfläche 12. Bei der gezeigten Ausführung steht der Halteteil 11 gegenüber der konischen Spannfläche 10 nach vorne vor und weist eine sich zur vorderen Stirnfläche 12 hin konisch verjüngende Außenfläche 13 auf. Durch den nach vorne vorstehenden Halteteil 11 kann das Werkzeug weiter außerhalb des Spannfutters gespannt werden, so dass Reichweite des Werkzeugs vergrößert wird.

Der Schrumpfspannadapter 1 enthält außerdem eine von der hinteren Stirnfläche 4 zur vorderen Stirnfläche 12 verlaufende zentrale Durchgangsöffnung 14 mit einem im Durchmesser erweiterten hinteren Bereich 15 und einem vorderen Spannbereich 16. Wie aus Figur 1 ersichtlich ist, erstreckt sich der vordere Spannbereich 16 von der vorderen Stirnfläche 12 durch den vorderen Aufnahmebereich 3 bis in den innerhalb des Spannzangenfutters angeordneten hinteren Haltebereich 2 hinein. Der Innendurchmesser der Durchgangsöffnung 14 im vorderen Spannbereich 16 ist an den Außendurchmesser des Werkzeugschafts eines zu spannenden Werkzeugs angepasst und geringfügig kleiner als der Außendurchmesser des Werkzeugschafts. Durch Erwärmung kann der Schrumpfspannadapter 1 im Spannbereich radial aufgeweitet werden, so dass der Werkzeugschaft in die Durchgangsöffnung 14 eingesetzt werden kann. Beim Erkalten und dem damit verbundenen Zusammenzehen des Schrumpfspannadapters 1 wird das Werkzeug dann im Spannbereich 16 der Durchgangsöffnung 14 formgenau und kraftschlüssig fixiert.

Der Schrumpfspannadapter 1 weist in einem mittleren Bereich der Durchgangsöffnung 14 mehrere von der Durchgangsöffnung 14 radial nach außen verlaufende und über den Umfang verteilte Schlitze 17 vorgesehen. Bei dem gezeigten Ausführungsbeispiel sind vier über den Umfang gleichmäßig verteilte Schlitze 17 vorgesehen. Es können aber auch nur zwei, drei oder mehr als vier Schlitze 17 sein. Die Schlitze 17 sind derart ausgeführt, dass sie nicht bis zur Außenseite des Schrumpfspannadapters 1 durchgehen, sondern vorher enden. Sowohl das hintere Ende 18 als auch das vordere Ende 19 der Schlitze 17 ist von der hinteren Stirnfläche 4 bzw. der vorderen Stirnfläche 12 des Schrumpfspannadapters 1 beabstandet.

Die Tiefe T der Schlitze 17 ist vorzugsweise so gewählt, dass die in diesem Bereich verbleibende Außenwand des Schrumpfspannfutters 1 im Wesentlichen dieselbe Dicke wie im vorderen Aufnahmebereich 3 aufweist. Die Schlitze 17 weisen vorzugsweise eine Breite von 0,5 bis 2 mm auf. Die Schlitze 17 sind außerdem im Wesentlichen parallel zur Mittelachse 18 des Schrumpfspannadapters 1 angeordnet. Sie können aber auch bis zu einem Winkel von etwa 20° gegenüber der Mittelachse 18 geneigt sein.

In den Figuren 3 bis 6 ist ein weiteres Ausführungsbeispiel eines Schrumpfspannadapters 1 für ein Spannzangenfutter gezeigt. Diese Ausführung unterscheidet sich von dem Ausführungsbeispiel der Figuren 1 bis 3 lediglich durch die Ausgestaltung der Schlitze 17. Ansonsten ist der Schrumpfspannadapter 1 wie bei der zuvor ausführlich beschriebenen Ausführung aufgebaut, so dass einander entsprechende Teile auch mit denselben Bezugszeichen versehen sind. Bezüglich deren Beschreibung wird auf die Ausführung der Figuren 1 bis 3 verwiesen.

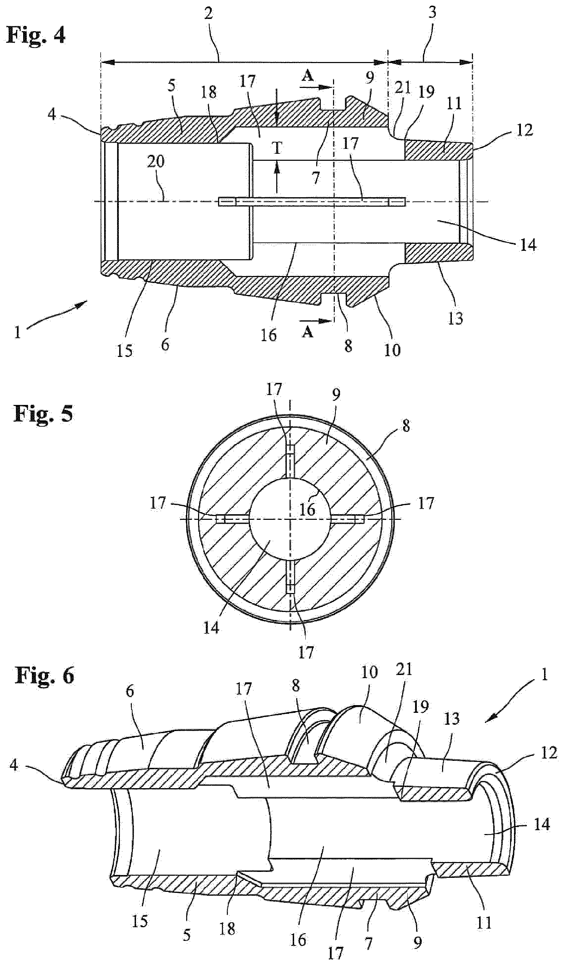

Im Unterschied zur Ausführung der Figuren 1 bis 3 erstrecken sich sind die Schlitze 17 bei der Ausführung der Figuren 4 bis 5 weiter in den nach vorne vorstehenden vorderen Aufnahmebereich 11 hinein, so dass sich an dem Übergang von dem hinteren Haltebereich 2 zum vorderen Aufnahmebereich 3 ein Durchbruch 21 ergibt. Über diesen Durchbruch 21 kann ein Kühlmittel zur Außenseite des vorderen Aufnahmereichs 11 geleitet werden.

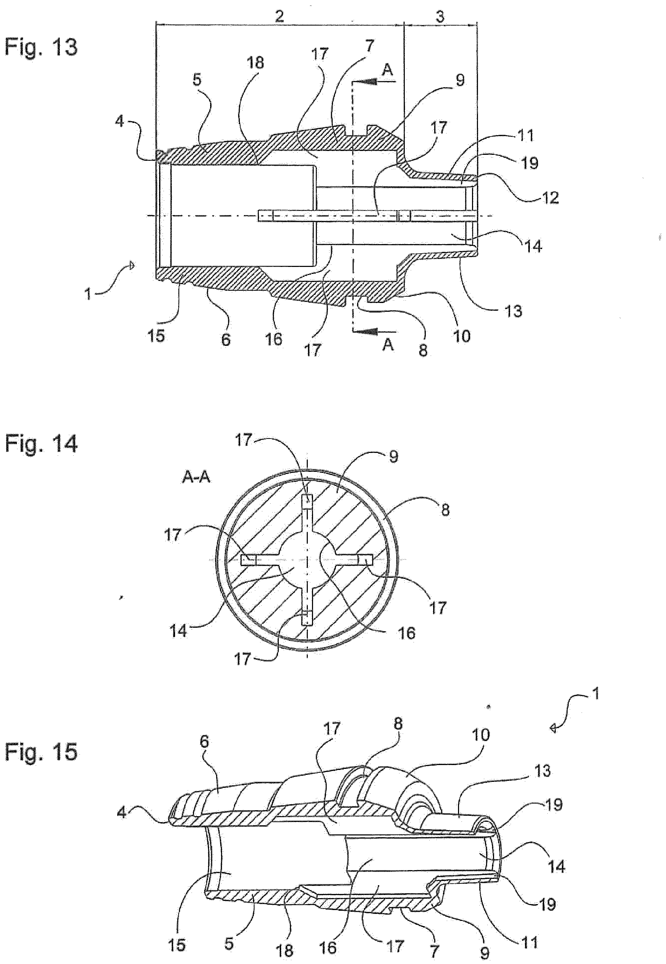

In den Figuren 13 bis 15 ist noch ein weiteres Beispiel eines Schrumpfspannadapters 1 für ein Spannzangenfutter, der nicht Teil der beanspruchten Erfindung ist, gezeigt. Diese Ausführung unterscheidet sich von dem Ausführungsbeispiel der Figuren 1 bis 3 auch hier wieder lediglich durch die Ausgestaltung der Schlitze 17. Ansonsten ist der Schrumpfspannadapter 1 wie bei der zuvor ausführlich beschriebenen Ausführung aufgebaut, so dass einander entsprechende Teile auch mit denselben Bezugszeichen versehen sind. Bezüglich deren Beschreibung wird auf die Ausführung der Figuren 1 bis 3 verwiesen.

Im Unterschied zur Ausführung des Schrumpfspannadapters 1 nach den Figuren 1 bis 3 erstrecken sich die Schlitze 17 bei der Ausführung der Figuren 13 bis 15 bis an die vordere Stirnfläche 12 des Schrumpfspannadapters 1. D.h., die vorderen Enden 19 der Schlitze 17 reichen bei dieser Ausführung eines Schrumpfspannadapters 1 bis an vordere Stirnfläche 12 - und sind nicht, wie bei der Ausführung des Schrumpfspannadapters 1 nach den Figuren 1 bis 3, von der vorderen Stirnfläche 12 beabstandet.

Die Fertigung eines vorstehend beschriebenen Schrumpfspannadapters 1 kann konventionell durch ein abtragendes Fertigungsverfahren erfolgen. Hier können z.B. die Schlitze 17 im Inneren des Schrumpfspannadapters 1 durch ein Erodierverfahren herausgearbeitet werden. Eine Fertigung kann aber auch durch ein additives Herstellungsverfahren erfolgen. In diesem Fall kann z.B. der gesamte Schrumpfspannadapter 1 mitsamt den Schlitzen 17 durch ein Metalldruckverfahren erzeugt werden.

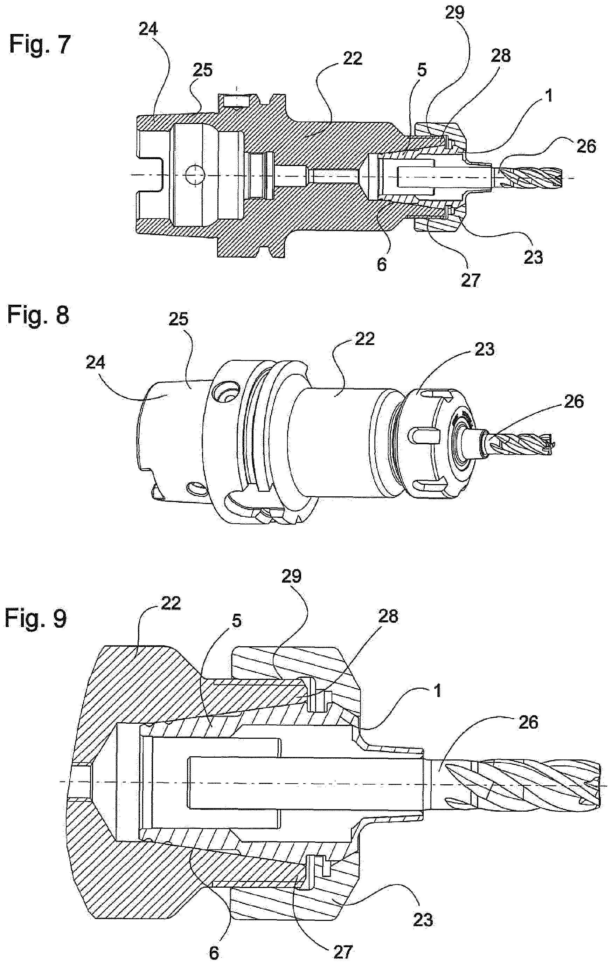

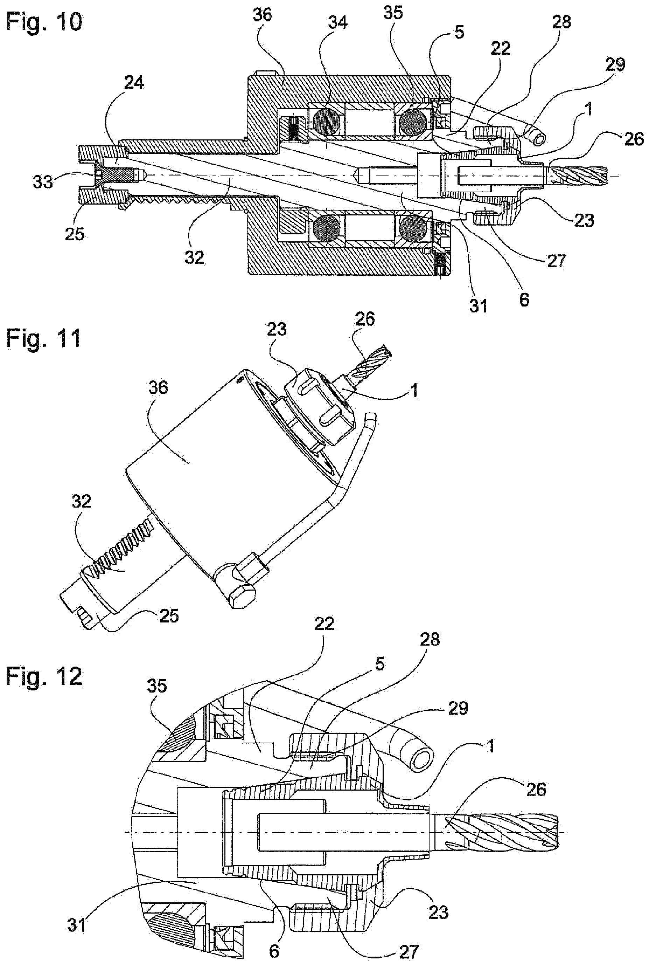

In den Figuren 7 bis 9 bzw. 10 bis 12 ist jeweils ein Schrumpfspannadapter 1, hier beispielshaft dieser nach Ausführung nach den Figuren 1 bis 3, für einen Einsatz bei einer Fräsmaschine (Figuren 7 bis 9) bzw. für einen Einsatz bei einer Drehmaschine (Figuren 10 bis 12) dargestellt.

Ungeachtet dieser Darstellungen können in entsprechender Weise auch die weiteren Schrumpfspannadapter 1 nach den Figuren 4 bis 6 oder 13 bis 15 - bei solchen Fräsmaschinen und Drehmaschinen - eingesetzt sein.

Die Figuren 7 bis 9 verdeutlichen, wie ein Rotationswerkzeug 26, hier ein Fräser, für den Einsatz in einer Fräsmaschine mittels des Schrumpfspannadapters 1 über ein diesen Schrumpfspannadapter 1 einspannendes Spannzangenfutter 22 an einer Spindel der Fräsmaschine (nicht dargestellt) befestigt werden kann.

Das Spannzangenfutter 22 sieht, wie die Figuren 7 und 8 zeigen, an seinem dem Rotationswerkzeug bzw. Fräser 26 abgewandten Ende 24 eine Schnittstelle 25 mit der Spindel vor, hier beispielhaft einen Hohlschaftkegel, kurz HSK. Auch andere genormte Schnittstellen 25, wie ein Steilkegel, kurz SK, können vorgesehen sein.

Am anderen, dem HSK 25 gegenüberliegenden Ende 27 des Spannzangenfutters 22 ist, wie die Figuren 7 bis 9 zeigen, der Einspannbereich 28 - in Form einer konischen Aufnahme 28 - für den das eingeschrumpfte Rotationswerkzeug bzw. Fräser 26 aufweisenden Schrumpfspannadapter 1 ausgebildet, welcher Einspannbereich 28 sich zur Spindel hin verjüngt.

Das Rotationswerkzeug bzw. hier der Fräser 26 wird für die Verwendung in dem Spannzangenfutter 22 zuerst in den Schrumpfspannadapter 1 eingeschrumpft. Dann wird der Schrumpfspannadapter 1 - mit seinem konischen Hinterteil 5 bzw. mit seiner konischen Außenfläche 6 - zusammen mit dem Rotationswerkzeug bzw. dem Fräser 22 in die konische Aufnahme 28 des Spannzangenfutters 22 eingesetzt und dann, wie hier in den Figuren 7 bis 9 dargestellt, durch die Verwendung einer Spann- bzw. Überwurfmutter 23 in die konische Aufnahme 28 des Spannzangenfutters 22 hineingepresst.

Die Überwurfmutter 23 selbst greift in ein dafür im Einspannbereich 28 des Spannzangenfutters 22 vorgesehenes Außengewinde 29 am Spannzangenfutter 22 ein. Durch Drehung wird die Überwurfmutter 23 axial verschoben. Durch die konische Form wird der Schrumpfspannadapter 1 in die konische Aufnahme 28 hineingepresst und dadurch der Verbund aus Schrumpfspannadapter 1 und in diesem eingeschrumpften Rotationswerkzeug bzw. Fräser 26 reib- und formschlüssig gehalten.

Die Figuren 10 bis 12 verdeutlichen einen weiteren Einsatz des Schrumpfspannadapters 1, hier wieder beispielshaft dieser nach Ausführung nach den Figuren 1 bis 3, - in diesem Fall - - rotierend - bei einer Drehmaschine (Figuren 10 bis 12).

Die Figuren 10 bis 12 zeigen, wie ein Rotationswerkzeug 26, hier ebenfalls ein Fräser 26, für einen Einsatz - rotierend - in einer Drehmaschine mittels des Schrumpfspannadapters 1 bei der Drehmaschine (nicht dargestellt) verwendet werden kann.

Das Spannzangenfutter 22 ist dabei, wie insbesondere die Figuren 10 und 11 verdeutlichen, als integraler vorderer Teil 31 einer Spindel 32 ausgebildet.

Die Spindel 32 sieht an ihrem dem Rotationswerkzeug bzw. Fräser 26 abgewandten Ende 24 eine Schnittstelle 25 - in Form eines zentriert an diesem Spindelende 24 mittels einer Senkschraube 33 angeschraubten Anschlusselements 25 - zur Übertragung der Drehbewegung auf die Spindel 32 vor. Darüber drehfest an einer Antriebseinheit bei der Drehmaschine angekoppelt kann dann das Rotationswerkzeug bzw. der Fräser 26 rotiert werden.

Am anderen dieser (Ankoppel-)Schnittstelle 25 gegenüberliegenden und das Spannzangenfutter 22 ausbildenden Spindelende 27 ist, wie die Figuren 10 bis 12 zeigen, der Einspannbereich 28 - in Form einer konischen Aufnahme 28 - für den das eingeschrumpfte Rotationswerkzeug bzw. Fräser 26 aufweisenden Schrumpfspannadapter 1 ausgebildet, welcher Einspannbereich 28 sich in Richtung zur (Ankoppel-)Schnittstelle 25 hin verjüngt.

Das Rotationswerkzeug bzw. der Fräser 26 wird für die Verwendung in dem Spannzangenfutter 22 zuerst in den Schrumpfspannadapter 1 eingeschrumpft. Dann wird der Schrumpfspannadapter 1 - mit seinem konischen Hinterteil 5 bzw. mit seiner konischen Außenfläche 6 - zusammen mit dem Rotationswerkzeug bzw. dem Fräser 26 in die konische Aufnahme 28 des Spannzangenfutters 22 eingesetzt und dann, wie hier in den Figuren 10 bis 12 dargestellt, durch die Verwendung einer Spann- bzw. Überwurfmutter 23 in die konische Aufnahme 28 des Spannzangenfutters 22 hineingepresst.

Die Überwurfmutter 23 selbst greift in ein dafür im Einspannbereich 28 des Spannzangenfutters 22 vorgesehenes Außengewinde 29 am Spannzangenfutter 22 ein. Durch Drehung wird die Überwurfmutter 23 axial verschoben. Durch die konische Form wird der Schrumpfspannadapter 1 in die konische Aufnahme 28 hineingepresst und dadurch der Verbund aus Schrumpfspannadapter 1 und in diesem eingeschrumpften Werkzeug 26 reib- und formschlüssig (in dem Spannzangenfutter 22 bzw. in der Spindel 32) gehalten.

Die Spindel 32 wird, wie sich weiter den Figuren 10 und 11 entnehmen lässt, mittels zweier auf der Spindel 32 verspannter Schrägkugellager 34, 35 in einem Gehäuse 36, d.h. hier einem VDI-Adapter 36, gelagert, welcher in einen Revolver der Drehmaschine einsteckbar bzw. eingesteckt ist.

Der dargestellte Einsatzfall des Schrumpfspannadapters 1 nach den Figuren 10 bis 12 beschreibt den Fall eines bei der Drehmaschine rotierenden Werkzeugs 26 bzw. rotierenden Spannzangenfutters 22 mit dort eingespannten Schrumpfspannadapter 1 - Werkzeug 26 - Verbund, wohingegen aber auch - in entsprechend angepasster Konstruktion - das Werkzeug 26 - und so des Spannzangenfutter 22 mit Schrumpfspannadapter 1 und Werkzeug 26 - stehend - bei Drehmaschinen vorgesehen sein kann.

Obwohl die Erfindung im Detail durch die bevorzugten Ausführungsbeispiele näher illustriert und beschrieben wurde, so ist die Erfindung nicht durch die offenbarten Beispiele eingeschränkt und andere Variationen können hieraus abgeleitet werden, ohne den Schutzumfang der Erfindung, der in den Ansprüchen angegeben ist, zu verlassen.

### Bezugszeichenliste

- 1: Schrumpfspannadapter
- 2: Hinterer Haltebereich
- 3: Vorderer Aufnahmebereich
- 4: Hintere Stirnfläche
- 5: Konischer Hinterteil
- 6: Konische Außenfläche
- 7: Zwischenteil
- 8: Ringnut
- 9: Vorderteil
- 10: Konische Spannfläche
- 11: Halteteil
- 12: Vordere Stirnfläche
- 13: Konische Außenfläche
- 14: Durchgangsöffnung
- 15: Hinterer Bereich
- 16: Vorderer Spannbereich
- 17: Schlitz
- 18: Hinteres Ende des Schlitzes
- 19: Vorderes Ende des Schlitzes
- 20: Mittelachse
- 21: Durchbruch
- 22: Spannzangenfutter
- 23: Überwurf-/Spannmutter
- 24: Ende
- 25: Schnittstelle, HSK
- 26: (Rotations-)Werkzeug, Fräser
- 27: (Spindel-)Ende
- 28: Einspannbereich, konische Aufnahme
- 29: Außengewinde
- 31: Integraler vorderer Teil
- 32: Spindel
- 33: Senkschraube
- 34: Schrägkugellager
- 35: Schrägkugellager
- 36: Gehäuse, VDI-Adapter

## Patentansprüche

1. Schrumpfspannadapter (1) für ein Spannzangenfutter, der einen hinteren konischen Haltebereich (2) zur Halterung in einem Spannzangenfutter, einen vorderen Aufnahmebereich (3) zur Halterung eines Werkzeugschafts und eine von einer vorderen Stirnfläche (12) des Aufnahmebereichs (3) zu einer hinteren Stirnfläche (4) des Haltebereichs (2) verlaufende Durchgangsöffnung (14) enthält, deren Spannbereich (16) sich bis in den hinteren Haltebereich (2) erstreckt, wobei in einem mittleren Bereich der Durchgangsöffnung (14) mehrere von der Durchgangsöffnung (14) radial nach außen verlaufende und über den Umfang verteilte Schlitze (17) angeordnet sind, deren vordere Enden (19) von der vorderen Stirnfläche (12) und deren hintere Enden (18) von der hinteren Stirnfläche (4) beabstandet sind.

2. Schrumpfspannadapter (1) nach Anspruch 1, **dadurch gekennzeichnet, dass** die Schlitze (17) in einem hinteren Teil des Spannbereichs (16) der Durchgangsöffnung (14) angeordnet sind.

3. Schrumpfspannadapter (1) nach einem der Ansprüche 1 bis 2, **dadurch gekennzeichnet, dass** sich die Schlitze (17) bis in den vorderen Aufnahmebereich (3) erstrecken.

4. Schrumpfspannadapter (1) nach einem der Ansprüche 1 bis 3, **dadurch gekennzeichnet, dass** in der Durchgangsöffnung (14) zwei oder mehr als zwei über den Umfang gleichmäßig verteilte Schlitze (17) angeordnet sind.

5. Schrumpfspannadapter (1) nach einem der Ansprüche 1 bis 3, **dadurch gekennzeichnet, dass** in der Durchgangsöffnung (14) vier über den Umfang gleichmäßig verteilte Schlitze (17) angeordnet sind.

6. Schrumpfspannadapter (1) nach einem der Ansprüche 1 bis 5, **dadurch gekennzeichnet, dass** die Tiefe T der Schlitze (17) so gewählt ist, dass die in diesem Bereich verbleibende Außenwand des Schrumpfspannfutters (1) im Wesentlichen dieselbe Dicke wie im vorderen Aufnahmebereich (3) aufweist.

7. Schrumpfspannadapter (1) nach einem der Ansprüche 1 bis 6, **dadurch gekennzeichnet, dass** die Schlitze (17) eine Breite von 0,5 bis 2 mm aufweisen.

8. Schrumpfspannadapter (1) nach einem der Ansprüche 1 bis 7, **dadurch gekennzeichnet, dass** die Schlitze (17) parallel zu einer Mittelachse (20) des Schrumpfspannadapters (1) angeordnet sind.

9. Schrumpfspannadapter (1) nach einem der Ansprüche 1 bis 8, **dadurch gekennzeichnet, dass** die Schlitze (17) so dimensioniert sind, dass sie die Außenkontur des Schrumpfspannadapters (1) nicht durchbrechen.

10. Schrumpfspannadapter (1) nach einem der Ansprüche 1 bis 8, **dadurch gekennzeichnet, dass** die Schlitze (17) so dimensioniert sind, dass sich an einem Übergang von dem hinteren Haltebereich (2) zum vorderen Aufnahmebereich (3) ein Durchbruch (21) ergibt.

11. Verwendung des Schrumpfspannadapters (1) nach einem der Ansprüche 1 bis 10 in einem Spannzangenfutter (22), insbesondere rotierend bei einer Fräsmaschine oder rotierend oder stehend bei einer Drehmaschine.

12. System mit einem Spannzangenfutter (22) und einer Überwurfmutter (23), **gekennzeichnet durch** einen Schrumpfspannadapter (1) nach einem der Ansprüche 1 bis 10, welcher unter Verwendung der Überwurfmutter (23) in dem Spannzangenfutter (22) verspannbar ist.

13. System nach Anspruch 12, **gekennzeichnet durch** eine Spindel, welche mit dem Spannzangenfutter (22) verbindbar ist, oder durch eine einstückig mit dem Spannzangenfutter (22) ausgebildete Spindel (32).

14. System nach Anspruch 12 oder Anspruch 13, **gekennzeichnet durch** ein in den Schrumpfspannadapter (1) einschrumpfbares Werkzeug (26), insbesondere Fräswerkzeug oder Bohrer oder Drehmeißel.

## Claims

1. Shrink tightening adapter (1) for a collet chuck, which includes a rear conical holding region (2) for mounting in a collet chuck, a front receptacle region (3) for mounting a tool shank, and a through-opening (14) which runs from a front end face (12) of the receptacle region (3) to a rear end face (4) of the holding region (2), the clamping region (16) of said through-opening (14) extending into the rear holding region (2), wherein disposed in a central region of the through-opening (14) are a plurality of slots (17) which run radially outwards from the through-opening (14) and are distributed across the circumference, the front ends (19) of said slots (17) being spaced apart from the front end face (12), and the rear ends (18) of said slots (17) being spaced apart from the rear end face (4).

2. Shrink tightening adapter (1) according to Claim 1, **characterized in that** the slots (17) are disposed in a rear part of the clamping region (16) of the through-opening (14).

3. Shrink tightening adapter (1) according to one of Claims 1 to 2, **characterized in that** the slots (17) extend into the front receptacle region (3).

4. Shrink tightening adapter (1) according to one of Claims 1 to 3, **characterized in that** two, or more than two, slots (17) which are distributed uniformly across the circumference are disposed in the through-opening (14) .

5. Shrink tightening adapter (1) according to one of Claims 1 to 3, **characterized in that** four slots (17) which are distributed uniformly across the circumference are disposed in the through-opening (14).

6. Shrink tightening adapter (1) according to one of Claims 1 to 5, **characterized in that** the depth T of the slots (17) is chosen in such a way that the external wall of the shrink tightening chuck (1) remaining in this region has substantially the same thickness as in the front receptacle region (3).

7. Shrink tightening adapter (1) according to one of Claims 1 to 6, **characterized in that** the slots (17) have a width of 0.5 to 2 mm.

8. Shrink tightening adapter (1) according to one of Claims 1 to 7, **characterized in that** the slots (17) are disposed so as to be parallel to a central axis (20) of the shrink tightening adapter (1).

9. Shrink tightening adapter (1) according to one of Claims 1 to 8, **characterized in that** the slots (17) are sized in such a way that they do not penetrate the external contour of the shrink tightening adapter (1).

10. Shrink tightening adapter (1) according to one of Claims 1 to 8, **characterized in that** the slots (17) are sized in such a way that a penetration (21) results at a transition from the rear holding region (2) to the front receptacle region (3).

11. Use of the shrink tightening adapter (1) according to one of Claims 1 to 10 in a collet chuck (22), in particular rotating in a milling machine, or rotating or stationary in a lathe.

12. System having a collet chuck (22) and a union nut (23), **characterized by** a shrink tightening adapter (1) according to one of Claims 1 to 10, which is able to be clamped in the collect chuck (22) by using the union nut (23) .

13. System according to Claim 12, **characterized by** a spindle which is connectable to the collet chuck (22), or by a spindle (32) which is configured to be integral to the collet chuck (22).

14. System according to Claim 12 or Claim 13, **characterized by** a tool (26), in particular a milling tool or drill bit or lathe chisel, which is able to be shrink-tightened in the shrink tightening adapter (1).

## Revendications

1. Adaptateur de serrage à retrait (1) pour un mandrin à pince de serrage, qui comporte une région de retenue conique arrière (2) destinée à être retenue dans un mandrin à pince de serrage, une région de réception avant (3) servant à la retenue d'une tige d'outil et une ouverture traversante (14) s'étendant d'une surface frontale avant (12) de la région de réception (3) à une surface frontale arrière (4) de la région de retenue (2), ouverture dont la région de serrage (16) s'étend jusque dans la région de retenue arrière (2), plusieurs fentes (17) s'étendant radialement vers l'extérieur à partir de l'ouverture traversante (14) et réparties sur la périphérie étant disposées dans une région centrale de l'ouverture traversante (14), fentes dont les extrémités avant (19) sont espacées de la surface frontale avant (12) et dont les extrémités arrière (18) sont espacées de la surface frontale arrière (4).

2. Adaptateur de serrage à retrait (1) selon la revendication 1, **caractérisé en ce que** les fentes (17) sont disposées dans une partie arrière de la région de serrage (16) de l'ouverture traversante (14).

3. Adaptateur de serrage à retrait (1) selon l'une des revendications 1 à 2, **caractérisé en ce que** les fentes (17) s'étendent jusque dans la région de réception avant (3) .

4. Adaptateur de serrage à retrait (1) selon l'une des revendications 1 à 3, **caractérisé en ce que** deux ou plus de deux fentes (17) réparties uniformément sur la périphérie sont disposées dans l'ouverture traversante (14) .

5. Adaptateur de serrage à retrait (1) selon l'une des revendications 1 à 3, **caractérisé en ce que** quatre fentes (17) réparties uniformément sur la périphérie sont disposées dans l'ouverture traversante (14).

6. Adaptateur de serrage à retrait (1) selon l'une des revendications 1 à 5, **caractérisé en ce que** la profondeur T des fentes (17) est sélectionnée de telle sorte que la paroi extérieure, demeurant dans cette région, du mandrin de serrage à retrait (1) présente sensiblement la même épaisseur que dans la région de réception avant (3).

7. Adaptateur de serrage à retrait (1) selon l'une des revendications 1 à 6, **caractérisé en ce que** les fentes (17) présentent une largeur de 0,5 à 2 mm.

8. Adaptateur de serrage à retrait (1) selon l'une des revendications 1 à 7, **caractérisé en ce que** les fentes (17) sont disposées parallèlement à un axe médian (20) de l'adaptateur de serrage à retrait (1).

9. Adaptateur de serrage à retrait (1) selon l'une des revendications 1 à 8, **caractérisé en ce que** les fentes (17) sont dimensionnées de telle sorte qu'elles interrompent le contour extérieur de l'adaptateur de serrage à retrait (1).

10. Adaptateur de serrage à retrait (1) selon l'une des revendications 1 à 8, **caractérisé en ce que** les fentes (17) sont dimensionnées de telle sorte qu'une ouverture (21) est produite à une transition de la région de retenue arrière (2) vers la région de réception avant (3).

11. Utilisation de l'adaptateur de serrage à retrait (1) selon l'une des revendications 1 à 10 dans un mandrin à pince de serrage (22), en particulier rotatif dans une machine à fraiser ou rotatif ou fixe dans un tour.

12. Système comportant un mandrin à pince de serrage (22) et un écrou d'accouplement (23), **caractérisé par** un adaptateur de serrage à retrait (1) selon l'une des revendications 1 à 10, lequel peut être serré dans le mandrin à pince de serrage (22) à l'aide de l'écrou d'accouplement (23).

13. Système selon la revendication 12, **caractérisé par** une broche, laquelle peut être reliée au mandrin à pince de serrage (22), ou par une broche (32) formée d'une seule pièce avec le mandrin à pince de serrage (22).

14. Système selon la revendication 12 ou la revendication 13, **caractérisé par** un outil (26) rétractable dans l'adaptateur de serrage à retrait (1), en particulier un outil de fraisage ou un foret ou un outil de tournage.
